Europäisches Patentamt

(19) European Patent Office

Office européen des brevets

(11) Publication number:

**0 089 849**

**B1**

(12) **EUROPEAN PATENT SPECIFICATION**

(45) Date of publication of patent specification: **02.07.86**

(21) Application number: **83301569.6**

(22) Date of filing: **21.03.83**

(51) Int. Cl.⁴: **A 23 K 1/20**

(54) Feed composition exhibiting improved pelleting characteristics, lignosulfonate based pelleting aid and a process for its preparation.

(30) Priority: **22.03.82 FI 820984**
**07.01.83 FI 830051**

(43) Date of publication of application:
**28.09.83 Bulletin 83/39**

(45) Publication of the grant of the patent:
**02.07.86 Bulletin 86/27**

(84) Designated Contracting States:
**AT BE DE FR GB IT NL SE**

(56) References cited:
**EP-A-0 013 723**
**US-A-3 035 920**
**US-A-3 476 740**
**US-A-3 600 308**

(73) Proprietor: **G.A. SERLACHIUS Corporation**
**F-35800 Mänttä (FI)**

(72) Inventor: **Ashorn, Theodore H.G.**
**Lielahti B 20**
**SF-33400 Tampere 40 (FI)**
Inventor: **Nysten, Brynolf B.J.**
**B 42 Niemi**
**SF-33400 Tampere 40 (FI)**
Inventor: **Karjalainen, Matti S.**
**Elamanlahteentie 22**
**SF-33430 Vuorentausta (FI)**

(74) Representative: **Allam, Peter Clerk et al**
**LLOYD WISE, TREGEAR & CO. Norman House**
**105-109 Strand**
**London WC2R 0AE (GB)**

Courier Press, Leamington Spa, England.

## Description

This invention relates to new feed compositions exhibiting improved pelleting characteristics, to a lignosulfonate based pelleting aid for the pelleting of animal feed rations, as well as to a process for the preparation of such an aid.

In recent years extensive research has been devoted to developing processes and equipment by means of which various kinds of finely divided feed ingredients, solids and liquids may be combined to nutritionally beneficial and mechanically durable pellets and other artificially cubed feed preparations of maximal palatability and easy handling characteristics.

It is known that the pelletibility characteristics vary considerably for different feedstuffs and feed compositions. Despite advances in pelleting technique, only few feed rations lend themselves to pelleting without the inclusion of a pelleting aid. Pelleting aids either improve the mechanical durability of the pellet and/or facilitate the output of the pelleting machinery.

At this time animal feedstuffs pelleting is a well established large scale industrial process comprising the following steps:

— milling, in which the feedstuffs are ground to the desired fineness,

— mixing, in which the various feed components and the pelleting aid of choice are well intermingled,

— conditioning, in which the temperature and/or the moisture of the feed mix is raised to a predetermined level, normally using steam,

— pelleting, in which the feed mix is combined by forcing the mix through the openings of a pelleting die, and sizing the extrudate into pellets of the desired length,

— cooling, in which the temperature of the pellets is reduced in an air current, whereby simultaneously the pellets undergo a drying process,

— crumbling, in which the pellets, if desired, are crushed to smaller sized particles.

As a rule, cubed rations represent a compromise between nutritional, cost and pelletibility considerations. The nature and amount of pelleting aid employed is generally a crucial factor for producing optimal pellet quality for mixes of least cost.

Numerous different kinds of pelleting aids have been proposed, cf. for example US patent specification 3,035,920 and FI patent specifications 40,509, 51,035 and 56,925. None of these have proved satisfactory and their drawbacks are well recognized. Clay and lignosulfonate based pelleting aids and mixtures thereof cover more than 90% of the market today for reasons of their low price and ready availability. Their principal shortcoming is, however, that they require an inclusion rate in the feedstuff of 1.5 to 4% by weight or more, based on the dry weight of the rations, to achieve the desired pelleting effect.

Steam quality and availability as well as the choice of the die employed with regard to thickness, hole design and diameter, material composition and state of wear, often prove limiting in that even high amounts of conventional pelleting aids do not afford a durable pellet.

When producing rations of lower feed value, inclusion rates of 1.5 to 4% of pelleting aid are for all practical purposes acceptable. For compositions of higher feed value inclusion rates of 1.5 to 4% are both impractical and costly, because the loss in feed value incurred by the inclusion of the pelleting aid has to be made up by more expensive ingredients of higher feed value. These in turn often make for a more difficult cubing of the ration. Inclusion rates of more than 1.5% clay are problematic also from a nutritional point of view because clays tend to irreversibly bind micro-nutrients. On the other hand, feed containing 1.5% or more of lignosulfonates tend to give rise to diarrhea in monogastric animals and also effect disadvantageously the palatability of the feed, even to the extent that the animal rejects the feed.

By means of the present invention the aforementioned drawbacks have been largely overcome. The feed compositions incorporating the lignosulfonate pelleting aid in accordance with the invention can be cubed to pellets of substantially improved cohesiveness, durability and resiliency, and the invention thus allows for a substantial reduction of the amount of pelleting aid to be employed in the ration. This in turn results in an elimination of the harmful side effects incurred by the inclusion of high binder levels.

Owing to the improved cohesiveness of the feed composition also the hitherto very critical factors, like steam conditioning and die choice, assume secondary significance, which results in lower cost pelleted feed rations.

The invention thus relates to a feed composition exhibiting improved pelleting characteristics and containing a lignosulfonate based pelleting aid, which composition is characterized in that the pelleting aid is dried, substantially water soluble, sulfonated lignin-containing material, which has been modified by oxidative crosslinking using as a redox activator or catalyst a salt or a complex salt of a metal ion capable of existing in more than one valency state, and/or by acid catalysed coupling with an aldehyde, and which exhibits a viscosity of not more than 10 Pas (10 000 cP) measured as a 25% by weight aqueous solution at 23°C.

The invention also relates to a new lignosulfonate based pelleting aid for the cubing of feed rations, which pelleting aid is characterized in that it contains dried, substantially water soluble, sulfonated lignin-containing material, which has been modified by oxidative crosslinking, using as a redox activator or catalyst a salt or a complex salt of a metal ion capable of existing in more than one valency state, and which exhibits a viscosity of not more than 10 Pas (10 000 cP) when measured as a 25% aqueous solution at 23°C.

The invention further relates to a new process for preparing the above defined pelleting aid, which comprises oxidative crosslinking of a sulfonated lignin-containing material in an aqueous solution, using as a redox activator or catalyst a salt or a complex salt of a metal ion which is capable of existing in more than one valency state, and the crosslinking reaction is interrupted short of gelling or insolubilization of the reaction product, and the product obtained is dried.

The feed composition according to the invention contain preferably at least 0.05% by weight, advantageously 0.2 to 0.6% by weight, of the crosslinked pelleting aid.

The oxidative crosslinking or oxidative coupling reaction comprises a dehydrogenative polymerization reaction, described i.a. by K. Sarkanen in LIGNINS edited by Sarkanen and Ludwig, Wiley-Interscience, as well as by H. H. Nimz et al. in Applied Polymer Symposium No. 28, 1225—1230 (1976), John Wiley & Sons Inc.

The DE-patent specification 2 221 353 discloses, on the other hand, oxidative crosslinking of sulfonated lignins present in spent sulfite liquor for gluing particle boards and like wood products, using as oxidant hydrogen peroxide in the presence of a cyanoferrate (II) or cyanoferrate (III) redox catalyst. Oxidative coupling of sulfonated lignin containing material under such conditions readily leads to the formation of insoluble products, as in the process described in DE-patent specification 2 221 353. Such insoluble products are, however, unsuitable for the purpose of this invention.

Hydrogen peroxide treatment in the absence of redox catalysts constitutes a well known procedure for improving specific properties of sulfonated lignins, cf. U.S.-patent 3,476,740, but such treatment does not bring about the product characteristics desired for the practice of our invention.

Acid-catalyzed condensations of lignosulfonates, on the other hand, with formaldehyde or other aldehydes are known to lead to crosslinked or water soluble product. Such crosslinked products have been observed to enhance the dispersing and flocculation characteristics of lignosulfonates, cf. U.S.-patent 3,600,308 and 4,332,589.

A prerequisite for the feed compositions according to the invention exhibiting improved pelleting characteristics is that the modified lignosulfonate based pelleting aid can be dried from its aqueous solution to a fine powder, which is substantially water soluble and slightly hydroscopic, and exhibits an increased viscosity, however, of not more than 10 Pas (10 000 cP) as measured at 23°C as a 25% by weight aqueous solution with a Brookfield viscosimeter.

As a starting material for the crosslinking or coupling reaction for obtaining the improved pelleting aid is preferably used a calcium, magnesium, sodium or ammonium bases sulfite spent liquor, or a mixture thereof, which optionally has been enriched in lignosulfonate solids, e.g. by removing carbohydrates, for example by fermentation or ultrafiltration.

While such lignosulfonate starting materials, which have a high ratio of lignosulfonates to other solids, have been found to best respond to the purposes of the invention for the preparation of a substantially water soluble crosslinked product, it should be understood that also ordinary spent sulfite liquors are suitable for obtaining the products beneficial for the pelleting of feed ration.

The concentration of the lignosulfonate containing starting material is not critical, but for practical purposes it is advantageous to use an about 45 to 55% solids furnish at the start of the reaction and to gradually add water when the crosslinking reaction proceeds and the viscosity builds up. The viscosity of an untreated furnish at 25% solids level is generally of the order of 0.005 to 0.006 Pas (5 to 6 cP).

The crosslinking reactions are carried out in aqueous solution. Two different coupling mechanisms have been found useful and economically viable. The first one, which is also a specific aspect of this invention involves oxidative dehydrogenation using as an oxidant advantageously hydrogen peroxide, or other peroxide compounds or salts thereof, and a redox catalyst comprised of a salt or complex salt of a metal ion, which is capable of undergoing valency change, at acidic, neutral or basic pH values of the system.

An especially suitable mode for the preparation of the oxidatively crosslinked pelleting aid according to the invention is such wherein hydrogen peroxide is used as the oxidant under slightly acidic, pH 3 to 6, conditions in the presence of catalytic amounts of a cyanoferrate (II) or cyanoferrate (III) salt, or in the presence of the corresponding complexes of cobalt and nickel. Such procedure is operative at pH values prevailing for commonly available sulfite spent liquor preparations and furthermore leads to no precipitation problems incurred, for instance, by adding sulfuric acid to calcium based liquors for the purpose of reducing the pH.

While cyanoferrate (III) salts are considered toxic, they apparently convert to non-toxic cyanoferrate (II) salts towards the end of the reaction when the temperature and pH of the reaction medium is raised. Toxicology tests on rats and mice surprisingly show that the $LD_{50}$-values of an untreated lignosulfonate material and a pelleting aid made with cyanoferrate (III) salts do not differ from each other. The aids according to this process may thus quite safely be used for the feeding of animals ($LD_{50} > 10$ g/kg body weight).

As metal salt activators also other metal salts may be used, e.g. ferri- and ferrosulfates, provided, however, that the metal ion is such that under the influence of an oxidant it is capable of valency change in the system, and that such metal ion forms a complex with sulfonated lignin to prevent decomposition of hydrogen peroxide. The metal salt can be added directly to the sulfonated lignin containing medium or can be precomplexed with such material.

As suitable peroxide compounds may be mentioned, besides hydrogen peroxide, for example $Na_2O_2$ as well as $K_2S_2O_8$ as well as their corresponding acids. When hydrogen peroxide is the oxidant it is suitably employed in an amount of about 1 to 10% by weight (calculated as 100%) based on the dry weight of the lignosulfonate material to be crosslinked, or an equivalent amount of other peroxide compounds, although these amounts are not critical. A suitable amount of activator is about 0.1 to 1.5% by weight, advantageously less than 1.0% by weight based on the dry solids of the lignin containing furnish.

The oxidative crosslinking reaction is exothermic. To prevent decomposition of heat and metallic ion sensitive hydrogen peroxide, it is therefore best to keep the reaction mixture close to room temperature by cooling, and to limit the metallic ion content to a maximum of one percent of reaction solids if a metal salt activator is used rather than a strong complex of the latter.

The second useful coupling mechanism for obtaining pelleting aids usable in the feed compositions according to the invention, is based on acid catalysed crosslinking with an aldehyde in aqueous solution. As an aldehyde preferably a lower aliphatic aldehyde, such as formaldehyde or a substance forming the same, such as paraformaldehyde, or acetaldehyde is used. Also other types of aldehydes known for this purpose may be employed, such as furfural aldehyde and/or acrolein.

For reason of availability and cost, preferably formaldehyde is used.

The aldehyde crosslinking reaction is carried out at an acidic pH-value, i.e. at a value below 7, and preferably at a value below pH 3. It is immaterial in this case whether the reaction is carried out so that the lignosulfonate in a first step is reacted with the aldehyde at basic pH-values, advantageously at a pH-value of about 10 to 12, and in a second step is subjected to condensation at an acidic pH-value, or whether the reaction is conducted in one single step at an acidic pH-value. Both alternatives are considered to be acid catalysed coupling with an aldehyde. The reaction is advantageously conducted, as stated above, employing a rather concentrated, suitably a 45 to 55 percent lignosulfonate solution, as well as at a raised temperature, such as at 40 to 180°C, for practical reasons advantageously about 90°C. The exact concentration of aldehyde in the solution is not critical and a suitable amount is about 1 to 4% by weight (calculated as 100%) based on lignosulfonate dry solids.

Essential in both these modifying processes is that the crosslinking reactions are interrupted before the product forms a gel or turns insoluble.

In the primary gelling stage the products are still water soluble, but when the gels age they turn insoluble and unsuitable for the purposes of the invention. The crosslinking reaction may be stopped in several different ways. Limiting the amount of coupling agent employed is the most effective means of preventing gel formation.

However, crosslinking may also be stopped for any desired degree, for instance, by raising the pH of the system in case of aldehyde coupling or raising the temperature, in the case of oxidative coupling. Diluting the reaction mixtures with starting furnishes or even with water are also acceptable means for bringing the reactions to a halt, as is the addition of sodium bisulfite which reacts with hydrogen peroxide and aldehydes.

The crosslinking reactions give rise to a viscosity increase which in turn affords a simple means for monitoring the coupling progress and for determining the point for interrupting the reaction, as well as for defining the products. In general it can be said that pelleting aids exhibiting a viscosity in the range of 0.075 to 0.5 Pas (75 to 500 cP), as measured as a 25% by weight aqueous solution at 23°C, are suitable for the purpose of the invention, giving good cohesion at inclusion levels of about 0.2 to 0.6% by weight of the ration. Pelleting aids exhibiting a viscosity of about 5 to 10 Pas (5000 to 10 000 cP) are of limited applicability and require high temperature and moisture levels to become active, i.e. strong conditioning of the feed mix. Pelleting aids of low viscosity, about 0.005 to 0.05 Pas (5 to 50 cP), on the other hand, require inclusion rates of about 0.8 to 1.5% by weight for good cohesion of most feed compositions. No difference in cohesiveness has been observed for products of similar viscosity but crosslinked in different manner.

The viscosity of the crosslinked, sulfonated lignin-containing material may, when desired or when necessary, be adjusted downwards to any desired value by adding to the crosslinked product untreated lignosulfonate containing material in suitable amounts, provided, however, that the viscosity of the final pelleting aid is below 10 Pas (10 000 cP) when measured as a 25% aqueous solution at 23°C.

The crosslinked, sulfonated lignin-containing material may advantageously be combined also with ordinary inert carriers, such as clay, talcum, calcium carbonate or gypsum without its good pelleting characteristics suffering. The inclusion of untreated lignosulfonate and/or inert carrier then takes advantageously place before drying the cross-linked product, but can take place also after drying.

The pH of the obtained products may, if desired, be adjusted by adding an acid or base. The pH of the products used for the pelleting of feed compositions is preferably within the range of 2.5 to 11.0, as measured as a 5% aqueous solution.

Crosslinking leads to the loss of hydroxylic functions and to steric shielding of groups participating in the formation of hydrogen bridges. Our finding that the cohesiveness of a feedstuffs composition can be substantially improved by adding thereto a crosslinked, sulfonated lignins containing, substantially water soluble material is thus surprising also in view of the fact that the ability to form hydrogen bridges has been considered an essential feature of pelleting aids.

By way of explanation, we therefore venture the following comment. Before pelleting the steam supplied during the conditioning process reacts with the pelleting aid and tends to more or less liquify the same because of its hygroscopic nature. If the viscosity of the steamed and thus liquified lignosulfonate is too high it will not spread and give rise to thick and discontinuous glue lines. If, on the other hand, the viscosity of the liquified lignosulfonate is too low the material will penetrate into the feed and give rise to starved joints. Our crosslinked lignosulfonates therefore also offer the compounder the opportunity to match his pelleting aid requirement to his conditioning system.

The following Examples illustrate the invention; the viscosity has been measured with a Brookfield viscosimeter as a 25% aqueous solution at 23°C, and the pH has been measured as a 5% aqueous solution.

### Example I

To 150 tons of concentrated (53%) for alcohol fermented calcium based spruce sulfite spent liquor of pH 4.5, was added 800 kg of ferrosulfate, $Fe_2SO_4 \cdot 7H_2O$, and 17 000 kg of hydrogen peroxide (40%) at 25°C. The batch was divided into three equal lots to yield three different pelleting aids as follows:

#### Pelleting Aid IA

One third of the above batch was allowed to stand for 36 hrs under periodic cooling to keep the temperature below 35°C. After this time the reaction mixture was on the point of gelling and it was watered down with 20 tons of water. The pH had dropped to 2.8 during the reaction and it was readjusted to 4.5 using a 50% sodium hydroxide solution and the temperature was raised to 90°C in preparation for spraydrying. After spraydrying in a "Niro"-type spraydrier ("Niro" is a Registered Trade Mark), a finely divided, only slightly hygroscopic powder was obtained, which was completely soluble in water and which exhibited a viscosity of 8.7 Pas (8700 cP).

#### Pelleting Aid IB

A second one-third of the above prepared batch was allowed to stand for 36 hrs as for example IA, after which was added 50 tons of the original untreated spent liquor, which had ben diluted to a solids content of 40%. The subsequent teatment corresponded to that described in the Example IA. The spraydried product exhibited a viscosity of 0.075 Pas (75 cP).

In substantially similar manner it is possible to adjust the viscosity of the end product to a value between that of the untreated spent liquor and the oxidatively crosslinked material by simply mixing together suitable amounts of spent liquor and reaction product.

#### Pelleting Aid IC

To one third of the above mentioned batch was added 10 tons of water and the batch was left standing for 20 hrs with occasional cooling. Adjusting the pH to 4.5, raising the temperature to 90°C and spraydrying afforded a product exhibiting a viscosity of 0.58 Pas (580 cP).

### Example II

Into a for alcohol fermented sulfite spent liquor according to Example I was added sufficient 50% sulfuric acid and solid sodium sulfate to adjust the pH to 3.5 and to precipitate virtually all calcium as calcium sulfate.

To 48 tons of the filtered solution, having a solids contents of 44% by weight owing to the diluting effect of the washing waters from the filter cake, was added 25 kg of potassium ferricyanide, $K_3Fe(CN)_6$, and 2000 kg of hydrogen peroxide (40%). The mixture was left standing for 10 hrs at 25°C with occasional cooling. 8 tons of water was added, whereafter the mix was divided into two equal lots, which were treated in the following manner to yield two different grade pelleting aids.

#### Pelleting Aid IIA

Half of the above mentioned batch was left standing for still 2 hrs, whereafter the temperature was raised to 75°C and the pH adjusted to 8.8 using 50% sodium hydroxide solution. Thereafter the temperature was raised to 90°C. Spraydrying afforded a sodium based product exhibiting a pH of 8.5 and a viscosity of 0.04 Pas (40 cP).

#### Pelleting Aid IIB

Into the second half of the above mentioned batch was added still 1500 kg of hydrogen peroxide solution (40%) and after 3 hrs thereinto was poured 10 tons of water. The product appeared gel-like after 8 hrs, but redissolved readily when the temperature was raised to 75°C and sufficient sodium hydroxide solution was added to pH 8.8. The pH of the spraydried product was 8.5 and the viscosity 9.5 Pas (9500 cP).

### Example III

Into 25 tons of for ethanol and protein fermented (PEKILO — Registered Trade Mark) calcium based spruce sulfite spent liquor, having a solids content of 46%, was added sufficient 50% sulfuric acid to adjust the pH to 3.2. The precipitated calcium sulfate was removed by filtering, whereafter to the filtrate was added 10 kg of potassium ferricyanide and 1000 kg of hydrogen peroxide solution (40%), whereby the mixture thickened within 2 hrs. The reaction mixture, having a solids content of 41% at this stage, was further watered down with 7 tons of water. Raising the temperature to 75°C and adding sufficient sodium hydroxide solution to pH 10.5 and spraydrying afforded a product exhibiting a pH of 10.4 and a viscosity of 0.24 Pas (240 cP).

### Example IV

To 35 tons of magnesium based sulfite spent liquor exhibiting a pH of 3.3 and solids content of 53%, was added 150 kg of potassium ferrocyanide, $K_4Fe(CN)_6 \cdot 3H_2O$, and 4000 kg of hydrogen peroxide solution (40%). The solution was continuously cooled to keep the temperature below 35°C, and it started to turn thick after 14 hours. It was diluted with 12 tons of water and its temperature and pH were adjusted to 75°C and 9.0, respectively. The spraydried product exhibited a pH of 8.2 and a viscosity of 0.025 Pas (25 cP).

## Example V

This example illustrates the use of a water insoluble inert material as a carrier for an oxidatively crosslinked, water soluble, sulfonated lignins containing pelleting aid.

To 50 tons of concentrated (53%) for alcohol fermented calcium based spruce sulfite spent liquor was added at 25°C sufficient 50% sodium hydroxide solution to raise the pH to 7.5. While continuously cooling 80 kg of potassium ferrocyanide was added and then 2000 kg of hydrogen peroxide solution (40%) and 30 tons of water. After a reaction time of 4 hrs, the viscosity of the solution was 0.035 Pas (35 cP). Then the temperature of the solution was raised to 85°C and 20 tons of finely divided talcum was added while continuously heating and stirring vigorously. Spraydrying afforded a finely divided, freely flowing powder having an ash content of about 55%.

## Example VI

To 70 tons concentrated (50%) for alcohol fermented calcium based spruce sulfite spent liquor were added 2000 kg of 37% formaldehyde solution and sufficient sulfuric acid to give a pH of 2.5. The mixture was kept at about 90°C for 36 hrs after which the pH was raised to 5 using 50% caustic soda. Spraydrying yielded a product exhibiting a viscosity of 0.056 Pas (56 cP).

## Example VII

To 30 tons of concentrated (47%) for ethanol and protein fermented (PEKILO) calcium based spruce sulfite spent liquor was added 1000 kg 37% formaldehyde solution and sufficient sulfuric acid to give a pH of 2.0. The mixture was kept at 90°C for 27 hrs after which time it no longer contained free formaldehyde and gelled when taken to room temperature. To the hot mix was added 20 tons hot concentrated (55%) calcium based birch sulfite spent liquor and the pH was raised to 4.5 using 50% caustic soda solution. The spraydried product exhibited a viscosity of 0.24 Pas (240 cP).

In order to demonstrate the improved cohesiveness of the feed compositions according to the invention, three different kinds of feed mixes were prepared employing inclusion rates of 0.1 to 1% by weight of the above prepared pelleting aids and, for purpose of comparison, also 3% by weight of a commercial calcium lignosulfonate feed binder. The feed mixes were pelleted under identical conditions. The pellets were compared in terms of hardness and resiliency by means of a Kahl hardness tester and by rotating the pellets for 3 minutes in a tumbler and recording the fines released from the pellets. The measurements were repeated three times and the samples were removed from the cooler, the first one in the beginning, the second one about half-way and the third at the end. Before measuring each sample was left standing for 30 minutes.

In order to simplify the tests, the pelleting aids were added to the feed mixes as obtained in the above Examples. Naturally they may also be added together with a vitamin-tracer element-premix or with other feed ingredients or mixed with clays, die lubricants etc.

## Example A
### Pelleted Dairy Ration

In a mixer 900 kg of ground barley, 600 kg of ground oats, 240 kg of dried distillers solubles, 500 kg of soybean meal, 490 kg of ground wheat, 75 kg of skim milk powder, 75 kg of dicalcium phosphate, 25 kg of salt, 35 kg of ground lime stone, 10 kg of magnesium oxide and 10 kg of a vitamin-tracer element-premix were finely intermingled with the pelleting aid. The mixes then received 9% by weight of molasses and were fed to a Buhler Miag Dpab-type pelleting machine, where the temperature was raised to 67°C and the total moisture to 16.9% using steam. The mixture was then fed at the rate of 15 tons/hr through a die having an opening diameter of 8.5 mm. Thereafter the fines were removed by screening and the pellets were cooled and dried.

In substantially similar manner the two following rations were prepared.

## Example B
### Pelleted Broiler Ration

Pelleted broiler rations were prepared by mixing the pelleting aids into a mix of 44% by weight of ground barley, 25% by weight of ground wheat, 16% by weight of soybean meal, 4.5% by weight of herring meal, 3.2% by weight of fat, 3.0% by weight of ground oats, 2.0% by weight of feed yeast, 1.7% by weight of dicalcium phosphate, 0.5% by weight of calcium carbonate, 0.25% by weight of sodium bicarbonate and 0.7% by weight of a vitamin-tracer element-premix.

The mix was fed to the conditioning chamber and steamed to 72°C, which raised the moisture level to 15.4%. The moist mash was then forced through a die having an opening diameter of 3.2 mm, at the rate of 3 tons/hr, whereafter the pellets were screened and cooled.

## Example C
### Pelleted Ration for Furred Animals Pelleted rations for furred animals were prepared by mixing the pelleting aids with a mix of 30% by weight of pre-cooked wheat flour, 10% by weight of finely ground soyabean meal, 8% by weight of rapeseed oil, 48% by weight of herring meal and 2% by weight of a vitamin-tracer element-premix. To the mixes were added an additional 6% by weight of molasses and steamed to 70°C, which raised the total moisture content to 16.2%. The mixes were then fed to a Buhler DFPC-type pelleting machine and forced through a die having an opening diameter of 4.5 mm. Thereafter the feeds were screened and cooled in an analogous manner as described above.

For the pelleted feed rations A to C produced employing the pelleting aids according to the above Examples I to VII, the hardness values and fines reported in the following Table were measured using the above mentioned test procedure.

From the Table it is evident that compared to an ordinary calcium based lignosulfonate feed binder, good results are obtained with considerably smaller inclusion rates of the pelleting aids according to the invention.

## FEED COMPOSITION

| Pelleting Aid | Inclusion Rate % | A | | B | | C | |
|---|---|---|---|---|---|---|---|
| | | Hardness KG | Fines % | Hardness KG | Fines % | Hardness KG | Fines % |
| IA | 0.4 | 4.4 | 6.1 | — | 6.1 | 3.6 | 7.8 |
| IA | 1.0 | — | — | — | — | 3.9 | 7.2 |
| IB | 0.5 | 6.8 | 4.2 | — | 5.6 | 2.9 | 9.3 |
| IB | 1.0 | 7.0 | 4.6 | — | 6.0 | 3.4 | 9.6 |
| IC | 0.5 | 7.0 | 4.6 | — | 6.2 | 3.6 | 6.4 |
| IC | 1.0 | 7.7 | 4.1 | — | 5.6 | 4.3 | 5.9 |
| IIA | 0.5 | 7.2 | 4.8 | — | 6.3 | 3.2 | 9.5 |
| IIB | 0.5 | 4.9 | 7.3 | — | 6.8 | 3.7 | 8.3 |
| III | 0.2 | 6.9 | 4.8 | — | 5.8 | 3.4 | 6.6 |
| III | 0.7 | 7.7 | 4.2 | — | 5.1 | 4.2 | 6.1 |
| | 1.0 | | | | | | |
| IV | 0.3 | 7.4 | 4.5 | — | 6.1 | 3.3 | 9.2 |
| V | 0.3 | 6.8 | 5.2 | — | 6.3 | — | — |
| VI | 0.5 | 7.3 | 4.8 | — | 6.8 | 3.2 | 8.8 |
| VII | 0.2 | 7.3 | 4.2 | — | 6.0 | 3.2 | 6.4 |
| VII | 0.7 | 7.5 | 4.3 | — | 4.9 | 3.9 | 5.8 |
| control, standard grade calcium lignosulfonate | 3.0 | 6.8 | 4.8 | — | 6.1 | 3.2 | 9.6 |

## Claims

1. Feed composition containing a lignosulfonate based pelleting aid, characterized in that the pelleting aid is dried, substantially water soluble, sulfonated lignin-containing material, which has been modified by oxidative crosslinking using as a redox activator or catalyst a salt or a complex salt of a metal ion capable of existing in more than one valency state, and/or by acid catalysed coupling with an aldehyde, and which exhibits a viscosity of not more than 10 Pas, measured as a 25% by weight aqueous solution at 23°C.

2. Feed composition according to the Claim 1, characterized in that it contains at least 0.05, preferably 0.2 to 0.6% by weight of the pelleting aid.

3. Feed composition according to the Claim 1 or 2, characterized in that the viscosity of the pelleting aid is 0.075 to 0.5 Pas, measured as a 25% by weight solution at 23°C.

4. Feed composition according to any one of the previous claims, characterized in that the pH of the pelleting aid is 2.5 to 11 as measured as a 5% by weight aqueous solution.

5. Feed composition according to any one of the preceding claims, characterized in that as the oxidant for the modification reaction, hydrogen peroxide is used in the presence of cyanoferrate (II) or -(III) salt.

6. Feed compositions according to any one of the Claims 1 to 4, characterized in that as the aldehyde for the modification reaction, formaldehyde, or a substance forming the same, is used.

7. Feed composition according to any one of the preceding claims, characterized in that as sulfonated lignin-containing material a calcium, sodium, magnesium or ammonium-based sulfite spent liquor is used.

8. Lignosulfonate based pelleting aid for the pelleting of feed compositions, characterized in that it contains dried, substantially water soluble, sulfonated lignin-containing material, which has been modified by means of oxidative crosslinking, using as a redox activator or catalyst a salt or a complex salt of a metal ion capable of existing in more than one valency state and which exhibits a viscosity of not more than 10 Pas, measured as a 25% by weight aqueous solution at 23°C.

9. Pelleting aid according to Claim 8, characterized in that its viscosity is 0.075 to 0.5 Pas.

10. Process for the preparation of a pelleting aid according to the Claim 8, characterized in that a sulfonated lignin-containing material is cross-linked with an oxidant in an aqueous solution, using as a redox activator or catalyst a salt or a complex salt of a metal ion capable of existing in more than one valency state, and that the crosslinking reaction is interrupted short of gelling or insolubilization of the reaction product and the product obtained is dried.

11. Process according to the Claim 10, characterized in that as the oxidant, hydrogen peroxide in the presence of a cyanoferrate(II) or -(III) salt is used.

12. Process according to the Claim 10 or 11, characterized in that the crosslinking reaction is interrupted by limiting the amount of oxidant used, raising the temperature, or diluting the reaction mixture with starting furnish or water.

## Patentansprüche

1. Futterzusammensetzung die ein auf Lignin-sulfonat basierendes Pelletierungshilfsmittel ent-hält, dadurch gekennzeichnet, daß das Pelletie-rungshilfsmittel ein getrocknetes, im wesent-lichen wasserlösliches, sulfoniertes Lignin ent-haltendes Material ist, das durch oxidative Vernetzung unter Verwendung eines Salzes oder eines komplexen Salzes eines Metallions, das in mehr als einer Wertigkeitsstufe bestehen kann als Redox-Aktivator oder Katalysator und/oder durch Säure katalysierte Verbindung mit einem Aldehyd modifiziert ist und das in einer wässrigen Lösung von 25 Gew. % bei 23°C eine Viskosität von nicht mehr als 10 Pas aufweist.

2. Futterzusammensetzung nach Anspruch 1, dadurch gekennzeichnet, daß sie wenigstens 0,05, vorzugsweise 0,2 bis 0,6 Gew. % des Pelletierungshilfsmittels enthält.

3. Futterzusammensetzung nach Anspruch 1 oder 2, dadurch gekennzeichnet, daß die Viskosität des Pelletierungshilfsmittels in einer Lösung mit 25 Gew. % bei 23°C 0,075 bis 0,5 Pas beträgt.

4. Futterzusammensetzung nach einem der vor-hergehenden Ansprüche, dadurch gekennzeich-net, daß der pH-Wert des Pelletierungshilfsmittels in 5 Gew. %iger wässriger Lösung 2,5 bis 11 beträgt.

5. Futterzusammensetzung nach einem der vor-hergehenden Ansprüche, dadurch gekennzeich-net, daß als Oxidationsmittel für die Modifikationsreaktion Wasserstoffperoxid in Gegenwart eines Cyanoferrat- (II) oder (III) -salzes verwendet wird.

6. Futterzusammensetzung nach einem der Ansprüche 1 bis 4, dadurch gekennzeichnet, daß als Aldehyd für die Modifikationsreaktion Formaldehyd oder ein dieses bildende Substanz verwendet wird.

7. Futterzusammensetzung nach einem der vor-hergehenden Ansprüche, dadurch gekennzeich-net, daß als sulfoniertes ligninhältiges Material eine Sulfitablauge auf Calcium-, Natrium-, Magnesium- oder Ammoniakbasis verwendet wird.

8. Pelletierungshilfsmittel auf der Basis von Ligninsulfonat zum Pelletieren von Futterzusammensetzungen, dadurch gekennzeichnet, daß es getrocknetes, im wesentlichen wasserlösliches sulfoniertes Lignin enthaltendes Material enthält, das durch oxidative Vernetzung unter Verwendung eines Salzes oder komplexen Salzes eines Metallions, das in mehr als einer Wertigkeit existieren kann, als Redox-Aktivator oder Katalysator modifiziert ist und das eine an einer wässrigen Lösung von 25 Gew. % bei 23°C gemessene Viskosität von nicht mehr als 10 Pas aufweist.

9. Pelletierungshilfsmittel nach Anspruch 8, dadurch gekennzeichnet, daß seine Viskosität 0,075 bis 0,5 Pas beträgt.

10. Verfahren zum Herstellen eines Pelletierungshilfsmittels nach Anspruch 8, dadurch gekennzeichnet, daß ein sulfoniertes, ligninhältiges Material mit einem Oxidationsmittel in wässriger Lösung vernetzt wird, wobei als Redox-Aktivator oder Katalysator ein Salz oder ein Komplexsalz eines Metallions verwendet wird, das in mehr als einer Wertigkeit existieren kann und daß die Vernetzungsreaktion kurz vor dem Gelieren oder dem Unlöslichwerden des Reaktionsproduktes unterbrochen und das erhaltene Produkt getrocknet wird.

11. Verfahren nach Anspruch 10, dadurch gekennzeichnet, daß als Oxidationsmittel Wasserstoffperoxid in Gegenwart eines Cyanoferrat- (II) oder (III) -salzes verwendet wird.

12. Verfahren nach Anspruch 10 oder 11, dadurch gekennzeichnet, daß die Vernetzungsreaktion durch Begrenzung der Menge des verwendeten Oxidationsmittels, durch Erhöhung der Temperatur oder durch Verdünnung der Reaktionsmischung mit dem Ausgangsmaterial oder Wasser unterbrochen wird.

**Revendications**

1. Composition alimentaire contenant un aide de granulation à base de lignosulfonate, caractérisée en ce que l'aide de granulation est une matière séchée essentiellement soluble dans l'eau, contenant de la lignine sulfonée, que l'on a modifiée par réticulation par oxydation, en utilisant, comme activateur ou catalyseur redox, un sel ou un sel complexe d'un ion métallique capable d'exister sous plus d'un état valentiel, et/ou par couplage catalysé par un acide avec un aldéhyde, et qui présente une viscosité qui ne dépasse pas 10 Pa·s mesurée sous forme d'une solution aqueuse à 25% en poids à 23°C.

2. Composition alimentaire selon la revendication 1, caractérisée en ce qu'elle contient au moins 0,05, de préférence 0,2 à 0,6% en poids de l'aide de granulation.

3. Composition alimentaire selon la revendication 1 ou 2, caractérisée en ce que la viscosité de l'aide de granulation est de 0,075 à 0,5 Pa·s mesurée sous forme d'une solution à 25% en poids à 23°C.

4. Composition alimentaire selon l'une quelconque des revendications précédentes, caractérisée en ce que le pH de l'aide de granulation est de 2,5 à 11 mesuré sous forme d'une solution aqueuse à 5% en poids.

5. Composition alimentaire selon l'une quelconque des revendications précédentes, caractérisée en ce que comme oxydant pour la réaction de modification, on utilise du peroxyde d'hydrogène en présence de sel (II) ou (III) de type cyanoferrate.

6. Compositions alimentaires selon l'une quelconque des revendications 1 à 4, caractérisées en ce que comme aldéhyde pour la réaction de modification, on utilise le formaldéhyde ou une substance le formant.

7. Composition alimentaire selon l'une quelconque des revendications précédentes, caractérisée en ce que comme matière contenant une lignine sulfonée on utilise une liqueur résiduaire sulfitique à base de calcium, sodium, magnésium ou ammonium.

8. Aide de granulation à base de lignosulfonate pour la granulation de compositions alimentaires, caractérisé en ce qu'il contient une matière séchée essentiellement soluble dans l'eau, contenant de la lignine sulfonée, qui a été modifiée par réticulation par oxydation en utilisant comme activateur ou catalyseur redox un sel ou un sel complexe d'un ion métallique capable d'exister sous plus d'un état valentiel et qui présente une viscosité ne dépassant pas 10 Pa·s mesurée sous forme d'une solution aqueuse à 25% en poids à 23°C.

9. Aide de granulation selon la revendication 8, caractérisé en ce que sa viscosité est de 0,075 à 0,5 Pa·s.

10. Procédé pour la préparation d'un aide de granulation selon la revendication 8, caractérisé en ce qu'une matière contenant une lignine sulfonée est réticulée avec un oxydant dans une solution aqueuse en utilisant comme activateur ou catalyseur redox un sel ou un sel complexe d'un ion métallique capable d'exister sous plus d'un état valentiel et en ce que la réaction de réticulation est arrêtée avant la gélification ou l'in-solubilisation du produit réactionnel et le produit obtenu est séché.

11. Procédé selon la revendication 10, caractérisé en ce que comme oxydant on utilise le peroxyde d'hydrogène en présence d'un sel (II) ou (III) de type cyanoferrate.

12. Procédé selon la revendication 10 ou 11 caractérisé en ce que la réaction de réticulation est interrompue par limitation de la quantité d'oxydant utilisée, élévation de la température ou dilution du mélange réactionnel avec la matière première de départ ou l'eau.